# FASCICULE DE BREVET EUROPEEN

(11) **EP 0 695 456 B1**
(45) Date de publication et mention de la délivrance du brevet: **06.08.1997**
(21) Numéro de dépôt: 95909843.5
(22) Date de dépôt: 20.02.1995
(51) Int. Cl.: G21C 19/20

(54) **DISPOSITIF DE GUIDAGE D'ASSEMBLAGE COMBUSTIBLE LORS DE SON CHARGEMENT**
VORRICHTUNG ZUR FÜHRUNG EINES BRENNSTOFFBUNDELS BEIM LADEN
DEVICE FOR GUIDING A FUEL ASSEMBLY DURING CHARGING

(30) Priorité: 23.02.1994 FR 9402054
(43) Date de publication de la demande: 07.02.1996
(73) Titulaire: FRAMATOME, 92400 Courbevoie (FR); COMPAGNIE GENERALE DES MATIERES NUCLEAIRES, F-78140 Velizy Villacoublay (FR)
(72) Inventeur: AMIET, Pierre, F-69420 Condrieu (FR); BRIN, Michel, F-38300 Bourgoin-Jallieu (FR)
(74) Mandataire: Fort, Jacques
(86) Numéro de dépôt international: FR9500193
(87) Numéro de publication internationale: WO9523414

(56) Documents cités:
- EP-A- 0 220 117
- DE-A- 1 464 967
- FR-A- 2 614 128
- FR-A- 2 652 942

## Description

La présente invention a pour objet un dispositif de guidage d'assemblage combustible destiné à l'amener, lors de son chargement, à un emplacement d'une plaque inférieure du coeur destiné à le recevoir dans un réacteur nucléaire.

On connaît déjà divers dispositifs destinés à remplir cette fonction, tels que ceux décrits dans les documents FR-A-2 588 689 et FR-A-2 614 128. Le dispositif de guidage selon ce dernier document comprend :
- un corps, d'encombrement horizontal correspondant à celui d'un assemblage, destiné à reposer sur la plaque de coeur, muni de moyens de préhension destinés à être saisis par une machine de manutention d'assemblage, prolongé vers le bas par des moyens de positionnement sur la plaque inférieure de coeur à un emplacement d'assemblage adjacent à celui destiné à recevoir l'assemblage à guider, et
- deux ailes portées par la partie basse du corps, faisant un angle de 90° dans un plan horizontal, ayant chacune un pan incliné de guidage se terminant vers le bas à l'emplacement destiné à recevoir l'assemblage, lorsque le dispositif est posé.

Un tel dispositif est placé, à l'aide du mât de la machine de chargement, à l'emplacement adjacent, en diagonale, à celui qui doit recevoir un assemblage à charger. Il permet d'amener le pied de l'assemblage à son emplacement correct et facilite l'engagement des trous de centrage dont est muni l'assemblage dans les doigts de la plaque destinés à les recevoir, même lorsque l'assemblage a été déformé du fait d'une irradiation antérieure.

Dans ce dispositif connu, les ailes sont fixées rigidement au corps. Elles rendent l'encombrement en plan du dispositif très supérieur à celui d'un assemblage combustible, et, en conséquence, compliquent la manutention du dispositif et son stockage. Au surplus, le dispositif est inutilisable pour guider un assemblage de rive vers son emplacement de réception.

La présente invention vise notamment à fournir un dispositif de guidage répondant mieux que ceux antérieurement connus aux exigences de la pratique, notamment en ce qu'il est d'un stockage plus facile : il peut notamment être placé dans un alvéole de stockage d'un assemblage en piscine.

Dans un mode avantageux de réalisation, chaque aile est montée sur un axe lui permettant de basculer entre les positions déployée et escamotée, à travers une fenêtre ménagée dans une paroi latérale du corps. En général l'axe sera placé de façon que le poids de l'aile tende à l'amener en position déployée. Souvent cela conduira à orienter l'axe de chaque aile de façon qu'il s'écarte progressivement de la face dans laquelle est pratiquée la fenêtre à proximité du dièdre encadré par les deux ailes et qu'il soit en pente vers le bas, de l'intérieur vers l'extérieur du corps.

En règle générale, les ailes seront équipées de moyens provoquant leur escamotage automatique lorsqu'on soulève le dispositif de la plaque inférieure de coeur. Pour cela, le corps peut contenir un équipage déplaçable verticalement entre une position basse (où l'équipage tend à être amené par gravité, du fait de son poids, et/ou par un ressort et/ou il maintient chaque aile en position escamotée) et une position haute où il est amené par butée sur des éléments de la plaque inférieure de coeur (tels que par exemple les doigts de centrage d'assemblage) et permet à l'aile de basculer, généralement sous l'action de son poids, en position déployée.

Le déplacement de chaque aile peut être limité par des butées réglables. Un verrou peut être prévu pour bloquer les ailes en position rétractée, par exemple lorsque le dispositif doit être posé à un emplacement de stockage, dans une piscine.

On donne avantageusement au dispositif le même encombrement qu'aux assemblages avec lesquels il est destiné à coopérer, de façon que la manutention du dispositif se fasse de la même façon que celle d'un assemblage, aussi bien lors du chargement que lors du transfert en piscine. Il est également avantageux de donner au dispositif le poids d'un assemblage.

L'invention sera mieux comprise à la lecture d'un mode particulier de réalisation, donné à titre d'exemple non limitatif. La description se réfère aux dessins qui l'accompagnent, dans lesquels :
- la figure 1 est une vue en élévation de l'ensemble du dispositif, avec les ailes déployées ;
- la figure 2 est une vue de dessous du dispositif de la figure 1 ;
- la figure 3 est une vue en perspective, à grande échelle, de la partie inférieure de la figure 1 ;
- la figure 4 est une vue en perspective de la partie inférieure du dispositif, vue dans une direction à 90° de celle de la figure 3 ;
- la figure 5 est une vue éclatée des mécanismes placés à l'intérieur de la partie inférieure du corps du dispositif, en perspective (le contour du corps étant représenté en traits mixtes) ;
- la figure 6 est une vue, en perspective, montrant une des ailes en position déployée, le contour du corps étant représenté en traits mixtes ;
- la figure 7 est une vue en perspective montrant une des ailes en position escamotée, le contour du pied du dispositif étant représenté en traits mixtes.

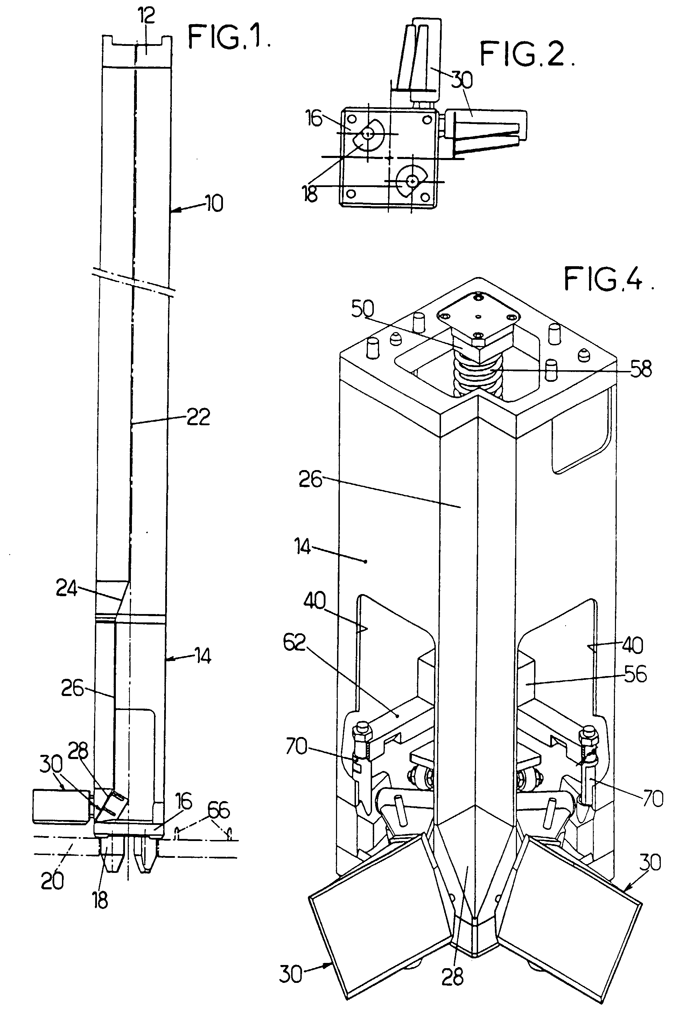

Le dispositif montré dans son ensemble en figure 1 a le même encombrement que celui d'un assemblage combustible qu'il est destiné à guider, du moins lorsque les ailes de guidage sont escamotées. Ce dispositif comporte un corps composite, qu'on peut regarder comme ayant une partie supérieure 10 munie de moyens de préhension 12 identiques à ceux d'un assemblage et une partie inférieure 14. Cette partie inférieure se termine par un pied 16 muni de pions en saillie 18 destinés à s'engager dans les trous d'eau de la plaque inférieure de coeur 20.

Elle comporte une enveloppe destinée à contenir des mécanismes qui seront décrits plus loin et une plaque de fixation rigide sur la partie supérieure.

La partie supérieure 10 est de section carrée mais, sur sa partie courante, présente un embrèvement 22 dont la section est approximativement le quart de la section droite du carré. Cet embrèvement se termine vers le bas par un étagement oblique 24 de raccordement avec un embrèvement 26, de moindre section, de la partie inférieure 14. Cet embrèvement, qui constitue un dièdre rentrant de 90°, présente un étagement terminal constitué par des pans inclinés 28.

La disposition décrite jusqu'ici est similaire à celle du dispositif suivant le document FR-A-2 614 128, auquel on pourra se reporter.

Le dispositif suivant l'invention comporte deux ailes 30 portées par la partie basse du corps, déployables vers une position où les ailes font un angle de 90° dans un plan horizontal, ayant et constituant chacune un pan incliné de guidage se terminant vers le bas au-dessus de l'emplacement destiné à recevoir l'assemblage. Les ailes sont déplaçables vers une position rétractée où elles sont escamotées dans l'encombrement horizontal du corps. Les pans inclinés de ces ailes, à l'état déployé, sont avantageusement situés dans le prolongement des pans inclinés terminant l'embrèvement du corps, lorsque les ailes sont déployées.

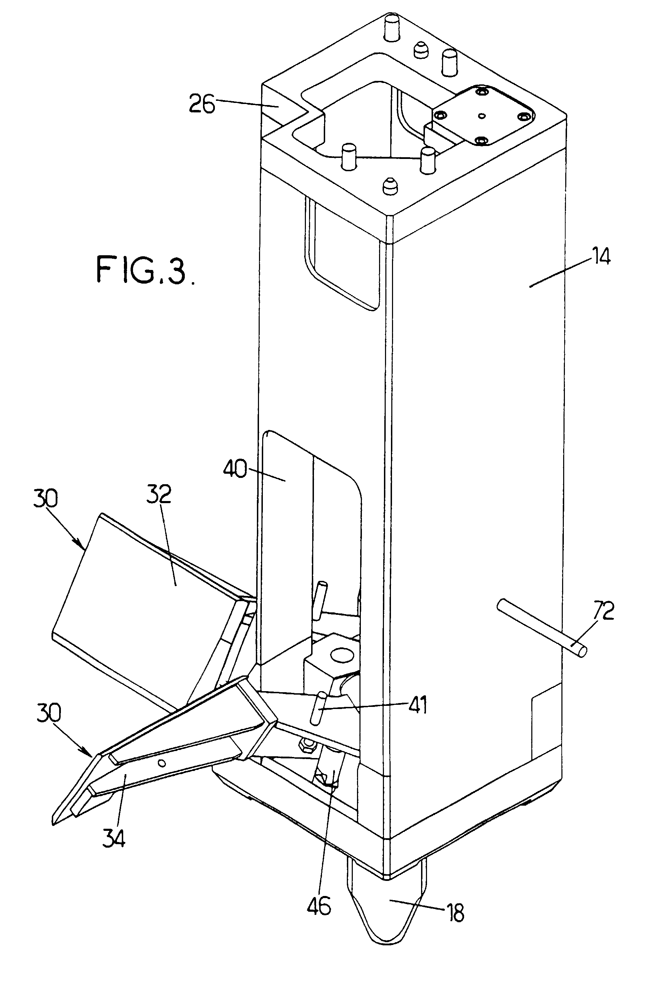

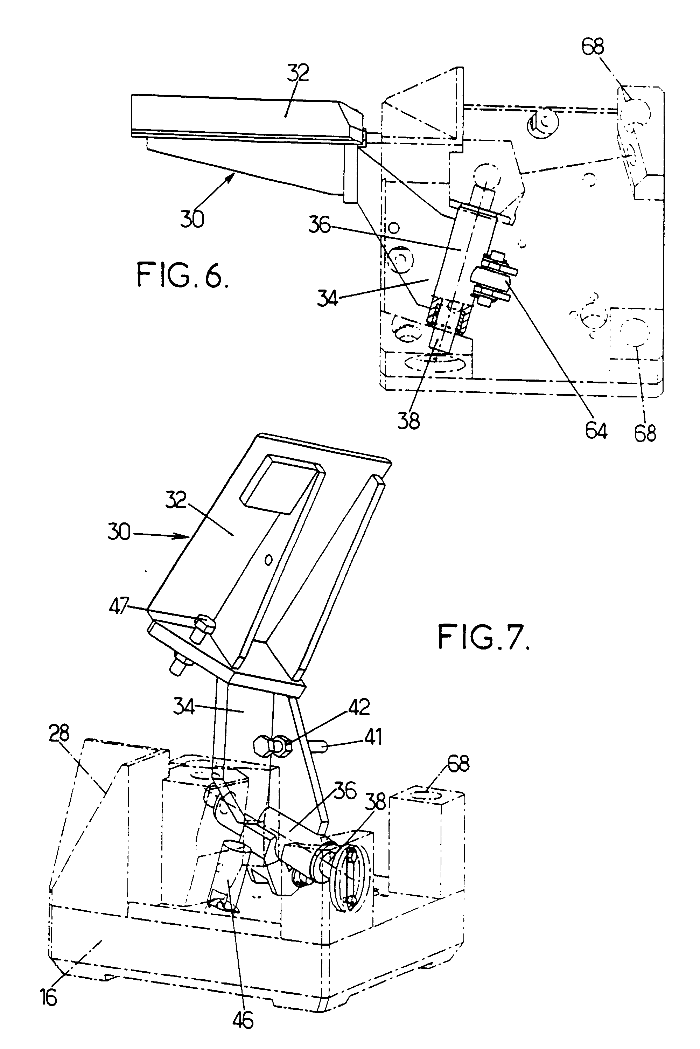

La constitution et le montage des ailes apparaîssent notamment sur les figures 3, 4, 6 et 7. Chaque aile 30 peut être constituée en plusieurs parties assemblées, par exemple par mécanosoudage. Dans le mode de réalisation illustré, elle peut être regardée comme ayant un pan de guidage 32, un bras de raccordement 34 et un moyeu 36 destiné à tourner sur un axe 38, solidaire du pied 16. Comme le montre la figure 7, l'axe 38 est incliné. Il s'éloigne de la face du corps dans laquelle est ménagée une fenêtre 40 de passage de l'aile au fur et à mesure qu'il se rapproche de l'embrèvement 26 et des pans inclinés 28. Il est en pente vers le bas de l'intérieur vers l'extérieur du corps. Ainsi le poids de chaque aile tend à la faire basculer depuis la position rétractée dans laquelle elle est montrée en figure 7, vers la position déployée.

Des butées peuvent être prévues pour ajuster les positions déployées et rétractées. Dans le cas illustré sur les figures, la position rétractée est adjustable à l'aide d'une butée réglable, constituée par exemple par une vis 41 munie d'un écrou d'arrêt 42, prévue pour venir s'appuyer sur un composant des mécanismes internes. Une butée 46 fixée au pied détermine la position déployée de l'aile 30. Enfin, une butée supplémentaire ajustable 47 peut être prévue sur l'aile pour transmettre directement au corps les efforts exercés par l'assemblage en cours de guidage par l'aile. Cette butée vient s'appuyer sur le pied 16, à côté d'un pan incliné 28.

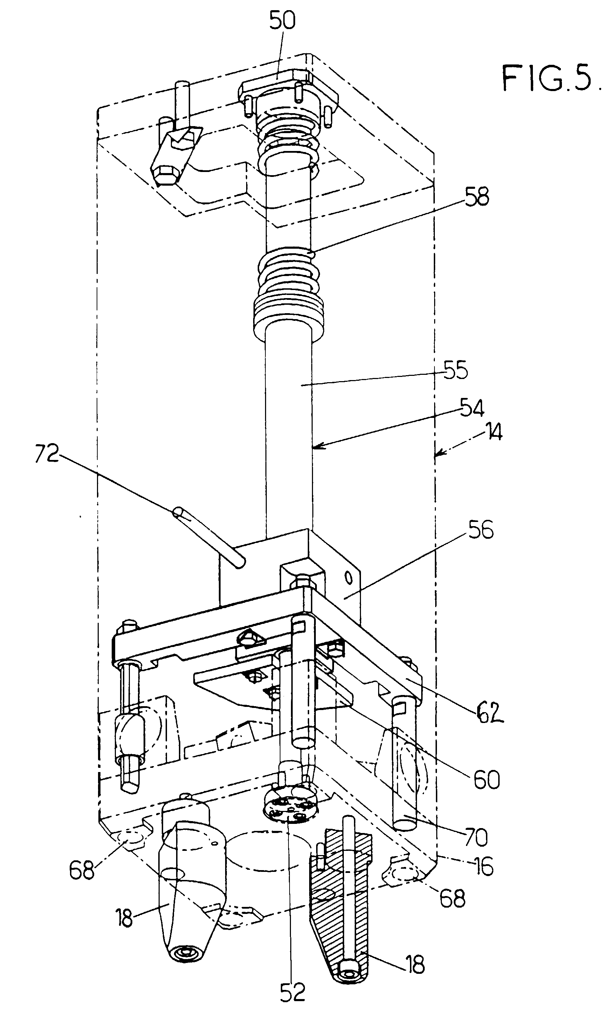

Le mécanisme destiné à provoquer le basculement forcé des ailes vers leur position escamotée (figures 4 et 5) comporte un axe de guidage haut 50 terminé par une embase destinée à s'appliquer dans une alvéole de forme correspondante (non représentée)de la partie supérieure 10 et un axe de guidage bas 52, coaxial à l'axe 50, fixé au pied 16. Sur les axes 50 et 52 peut coulisser verticalement un équipage 54, comportant un tube 55 sur lequel prend appui un ressort 58 monté autour de l'axe de guidage haut, mis en compression lors de l'assemblage des parties inférieure et supérieure du corps. Le tube 55 est fixé à un contrepoids 56, une équerre 62 et une platine de basculement 60. La platine 60 est disposée de façon qu'elle repousse vers le bas des galets 64 portés chacun par une chape solidaire d'un moyeu respectif 36 lorsqu'elle est amenée en position basse par l'action du ressort 58 et du contrepoids 56. L'action de l'équipage mobile, lorsqu'elle n'est pas contrariée, amène ainsi les ailes dans la position montrée en figure 7, où elles sont escamotées dans le corps.

Le déploiement des ailes est provoqué, dans le mode de réalisation illustré sur les figures, par la dépose du dispositif sur une plaque inférieure de coeur munie de doigts de centrage 66 (figure 1). Aux emplacements qui reçoivent un assemblage, ces doigts s'engagent dans des trous borgnes ménagés dans le pied de l'assemblage. Lorsque le dispositif est déposé à un emplacement d'assemblage, il est guidé par l'engagement des pions 18 dans les trous d'eau de la plaque et les doigts 66 s'engagent dans des trous 68 traversant le pied. Au moins un des doigts 66 vient s'appuyer sur une tige verticale 70 fixée à l'équerre 62. L'appui des doigts 66 sur les tiges 70 refoule ces dernières et l'ensemble de l'équipage mobile vers le haut par rapport au corps. Les ailes 30 se déploient alors sous l'action de leur propre poids, chaque galet 64 suivant la platine 60 dans son déplacement.

En revanche, la pose du dispositif sur un plan de stockage dépourvu de doigts ne provoque pas le déploiement des ailes. Pour éviter un déploiement intempestif des ailes, le dispositif peut comporter une broche 72 de verrouillage du contrepoids 56 en position basse, immobilisant les ailes.

Le mode de réalisation qui vient d'être décrit présente de nombreux avantages. Le déploiement des ailes n'intervient que lors de la mise en place sur une plaque comportant des doigts de centrage. Une aile peut se déployer seule, si l'autre est retenue par une paroi, ce qui permet notamment d'utiliser le dispositif pour aider à la mise en place d'un assemblage placé en périphérie du coeur. Toutefois de nombreuses variantes de réalisation sont possibles. Par exemple, le déploiement des ailes peut être commandé, plutôt que d'être provoqué par gravité. Des mécanismes de repliement indépendants l'un de l'autre peuvent être prévus. Le repliement en position escamotée peut être provoqué uniquement par gravité ou par l'action d'un ressort.

## Revendications

1. Dispositif de guidage d'assemblage combustible lors de sa pose à un emplacement déterminé d'une plaque inférieure de coeur de réacteur nucléaire, comprenant :
- un corps, d'encombrement correspondant à celui d'un assemblage combustible, destiné à reposer sur la plaque inférieure de coeur (20), muni de moyens de préhension destinés à être saisis par une machine de manutention d'assemblage, prolongé vers le bas par des moyens (18) de positionnement sur la plaque inférieure de coeur à un emplacement d'assemblage adjacent à celui destiné à recevoir l'assemblage à guider, et
- deux ailes (30) portées par la partie basse du corps, faisant un angle de 90° dans un plan horizontal, ayant chacune un pan incliné de guidage (32) se terminant vers le bas au-dessus de l'emplacement destiné à recevoir l'assemblage lorsque le dispositif est en place,
caractérisé en ce que chacune desdites ailes (30) est rétractable, à partir d'un état déployé, vers une position où elle est escamotée dans l'encombrement horizontal du corps.

2. Dispositif selon la revendication 1,
caractérisé en ce que chaque aile (30) est montée sur un axe (38) lui permettant de basculer entre les positions déployée et escamotée, à travers une fenêtre (40) ménagée dans une paroi latérale du corps.

3. Dispositif selon la revendication 2,
caractérisé en ce que l'axe (38) est placé de telle façon que le poids de l'aile tende à l'amener en position déployée.

4. Dispositif selon la revendication 2,
caractérisé en ce que l'axe (38) de chaque aile est placé de façon qu'il soit plus éloigné de la face dans laquelle est pratiquée la fenêtre à proximité d'un embrèvement en forme de dièdre encadré par les deux ailes et en ce que cet axe est en pente vers le bas de l'intérieur vers l'extérieur du corps.

5. Dispositif selon la revendication 1,
caractérisé en ce que le corps contient des moyens déplaçables verticalement dans le corps entre :
- une position basse où ils tendent à être amenés par gravité et/ou par un ressort (58) et où ils maintiennent chaque aile en position escamotée, et
- une position haute où ils sont amenés par butée sur des éléments (66) de la plaque inférieure de coeur et permettent à l'aile de basculer en position déployée.

6. Dispositif selon la revendication 5, caractérisé en ce que lesdits moyens comportent un équipage (54) coulissant sur au moins une tige verticale (50,52) appartenant au corps et destiné à s'appuyer sur des galets (64) solidaires des ailes, ledit équipage étant prolongé par des tiges verticales (70) destinées à venir en butée contre des doigts (66) de centrage appartenant à la plaque inférieure de coeur (20) lors de la dépose du dispositif sur la plaque inférieure de coeur.

7. Dispositif selon la revendication 1,
caractérisé en ce qu'il comporte, de plus, des butées réglables limitant le déplacement de chaque aile.

8. Dispositif selon l'une quelconque des revendications précédentes,
caractérisé par une broche coulissante (72) destinée à verrouiller à volonté les ailes en position rétractée.

9. Dispositif selon la revendication 1,
caractérisé en ce que le corps présente un embrèvement (26), constituant un dièdre rentrant de 90°, entre les deux ailes, présentant au niveau des ailes un étagement (28) constitué par des pans inclinés qui sont situés dans le prolongement de ceux des ailes lorsque ces dernières sont en position déployée.

10. Dispositif selon la revendication 9,
caractérisé en ce que le corps comprend une partie supérieure (10) et une partie inférieure (14), l'une et l'autre à section carrée, fixées l'une à l'autre, et en ce que l'embrèvement (22) de la partie supérieure représente approximativement le quart de la section droite du carré et se termine vers le bas par un étagement oblique (24) de raccordement avec l'embrèvement (26), de moindre section, de la partie inférieure (14).

## Patentansprüche

1. Vorrichtung zur Führung eines Brennelementbündels bei seinem Einbau an eine vorbestimmte Stelle einer unteren Platte eines Kerns eines Kernreaktors mit:
- einem Körper mit Abmessungen, die denen eines Brennelementbündels entsprechen, der dazu bestimmt ist, auf der unteren Platte des Kerns (20) zu ruhen und der mit Greifeinrichtungen versehen ist, die dazu bestimmt sind, von einer Bündelhandhabungsmaschine ergriffen zu werden, und der nach unten von Einrichtungen (18) zur Positionierung auf der unteren Platte des Kerns an einem Brennelementbündelplatz verlängert wird, der dem benachbart ist, der dazu dient, das zu führende Brennelementbündel aufzunehmen, und
- zwei vom unteren Abschnitt des Körpers getragene Flügel (30), die in einer horizontalen Ebene einen Winkel von 90° einschließen, wobei jeder eine geneigte Führungsfläche (32) hat, die nach unten oberhalb der Stelle endet, die dazu bestimmt ist, das Brennelementbündel aufzunehmen, wenn die Vorrichtung sich an Ort und Stelle befindet,
dadurch gekennzeichnet, daß jeder dieser Flügel (30) zurückziehbar ist, ausgehend von einer ausgefahrenen Lage in eine Stellung, wo er in dem horizontalen Raum des Körpers eingezogen bzw. verborgen ist.

2. Vorrichtung nach Anspruch 1, dadurch gekennzeichnet, daß jeder Flügel (30) auf einer Achse (38) montiert ist, die es ihm ermöglicht, zwischen der ausgefahrenen und der verborgenen Stellung zu schwenken, durch ein Fenster (40) hindurch, das in einer Seitenwand des Körpers ausgespart ist.

3. Vorrichtung nach Anspruch 2, dadurch gekennzeichnet, daß die Achse (38) derart angeordnet ist, daß das Gewicht des Flügels dazu strebt, ihn in eine ausgefahrene Stellung zu bringen.

4. Vorrichtung nach Anspruch 2, dadurch gekennzeichnet, daß die Achse (38) von jedem Flügel derart angeordnet ist, daß sie weiter von der Fläche entfernt ist, in der das Fenster nahe einer Spannfläche in Form eines Flächenwinkels, die von den beiden Flügeln eingerahmt ist, ausgeführt ist, und daß diese Achse nach unten des Inneren und nach dem Außenraum des Körpers geneigt ist.

5. Vorrichtung nach Anspruch 1, dadurch gekennzeichnet, daß der Körper Einrichtungen enthält, die verschiebbar sind zwischen:
- einer unteren Stellung, in die sie sich durch Schwerkraft und/oder eine Feder (58) zu bringen streben und in der sie jeden Flügel in verborgener Stellung halten, und
- einer oberen Stellung, in die sie durch Anschlag auf Elemente (66) der unteren Platte des Kerns gebracht werden und die es dem Flügel ermöglichen, in eine ausgefahrene Stellung zu schwenken.

6. Vorrichtung nach Anspruch 5, dadurch gekennzeichnet, daß die Einrichtungen ein Gerät (54) aufweisen, das auf wenigstens einer zum Körper zugehörigen senkrechten Stange (50, 52) gleitet und dazu bestimmt ist, sich auf Walzen (64) zu stützen, die mit den Flügeln verbunden sind, wobei dieses Gerät durch senkrechte Stangen (70) verlängert wird, die dazu bestimmt sind, gegen zur unteren Platte des Kerns (20) zugehörige Zentrierzapfen (66) beim Absetzen der Vorrichtung auf der unteren Platte des Kerns anzuschlagen.

7. Vorrichtung nach Anspruch 1, dadurch gekennzeichnet, daß sie darüber hinaus verstellbare Anschläge aufweist, die die Bewegung jedes Flügels begrenzen.

8. Vorrichtung nach einem der vorangegangenen Ansprüche, gekennzeichnet durch einen gleitenden Dorn (72), der dazu dient, die Flügel nach Belieben in zurückgezogener Stellung zu verriegeln.

9. Vorrichtung nach Anspruch 1, dadurch gekennzeichnet, daß der Körper eine Spannfläche (26) aufweist, die einen nach innen vorspringenden Flächenwinkel von 90° zwischen den Flügeln bildet, und die auf Höhe der Flügel eine Abstufung (28) aufweist, die von geneigten Flächen gebildet wird, die in Verlängerung der Flügel angeordnet sind, wenn letztere sich in ausgefahrener Stellung befinden.

10. Vorrichtung nach Anspruch 9, dadurch gekennzeichnet, daß der Körper einen oberen Abschnitt (10) und einen unteren Abschnitt (14) aufweist, wobei der eine und der andere von viereckigem Querschnitt sind und miteinander befestigt sind, und daß die Spannfläche (22) des oberen Abschnittes ungefähr das Viertel des Viereckquerschnitts darstellt und unten in einer schrägen Abstufung (24) endet zum Übergang bzw. zur Verbindung mit der Spannfläche (26), von kleinerem Querschnitt, des unteren Abschnittes (14).

## Claims

1. Device for guiding a fuel assembly while it is being installed at a given location of a nuclear reactor lower core plate, comprising:
- a body, the size of which corresponds to that of a fuel assembly, intended to rest on the lower core plate (20), equipped with holding means intended to be grasped by an assembly-handling machine, extended downwards by means (18) for positioning it on the lower core plate at an assembly location adjacent to the one intended to receive the assembly to be guided, and
- two wings (30) carried by the bottom part of the body, forming an angle of 90° in a horizontal plane, each one having an inclined guide face (32) ending at the bottom above the location intended to receive the assembly when the device is in place,
characterized in that each of the said wings (30) can be retracted, starting from a deployed state, towards a position in which it is withdrawn within the horizontal size of the body.

2. Device according to Claim 1,
characterized in that each wing (30) is mounted on a pin (38) allowing it to tilt between the deployed and withdrawn positions, through an opening (40) formed in a lateral wall of the body.

3. Device according to Claim 2,
characterized in that the pin (38) is placed so that the weight of the wing tends to bring it into the deployed position.

4. Device according to Claim 2,
characterized in that the pin (38) of each wing is placed so that it is further from the face in which the opening is made close to an indentation in the shape of a dihedron framed by the two wings and in that this pin slopes downwards from the inside towards the outside of the body.

5. Device according to claim 1,
characterized in that the body contains means which can be displaced vertically within the body between:
- a bottom position into which they tend to be brought under gravity and/or by a spring (58) and where they keep each wing in the withdrawn position, and
- a top position into which they are brought by abutting against elements (66) of the lower core plate and allow the wing to tilt into the deployed position.

6. Device according to Claim 5, characterized in that the said means include gear (54) sliding on at least one vertical rod (50, 52) belonging to the body and intended to bear on rollers (64) secured to the wings, the said gear being extended by vertical rods (70) which are intended to come into abutment against centring fingers (66) belonging to the lower core plate (20) when the device is set down on the lower core plate.

7. Device according to claim 1,
characterized in that it additionally includes adjustable limit stops limiting the displacement of each wing.

8. Device according to any one of the preceding claims, characterized by a sliding spindle (72) intended to lock the wings in the retracted position, as desired.

9. Device according to claim 1,
characterized in that the body has an indentation (26) constituting a 90°-reentrant dihedron, between the two wings, and in the region of the wings having a stepped part (28) consisting of inclined faces which are situated in the extension of those of the wings when the latter are in the deployed position.

10. Device according to Claim 9,
characterized in that the body comprises an upper part (10) and a lower part (14), both of square cross section, fixed to one another, and in that the indentation (22) of the upper part represents approximately one quarter of the cross section of the square and ends at the bottom in an oblique stepped part (24) joining it to the indentation (26), of smaller section, of the lower part (14).
